# EUROPEAN PATENT SPECIFICATION

(11) **EP 2 082 928 B1**
(45) Date of publication and mention of the grant of the patent: **17.03.2010**
(21) Application number: 08001361.8
(22) Date of filing: 24.01.2008
(51) Int. Cl.: B60R 25/02

(54) **Automobile steering wheel lock**
Lenkradschloss für ein Kraftfahrzeug
Verrouillage de volant automobile

(43) Date of publication of application: 29.07.2009
(73) Proprietor: Yung Chan Electrical Instrument Co., Ltd., Tainan City (TW)
(72) Inventor: Yu, Pin-Ying, Tainan City (TW)
(74) Representative: Volpert, Marcus

(56) References cited:
- DE-U1- 29 520 462
- US-B1- 7 043 947

## Description

### BACKGROUND OF THE INVENTION

### 1. Field of the Invention

This invention relates to an automobile steering wheel lock, particularly to one able to be quickly and conveniently locked on an automobile steering wheel, hard to be damaged and effectively preventing the automobile from being burgled.

### 2. Description of the Prior Art

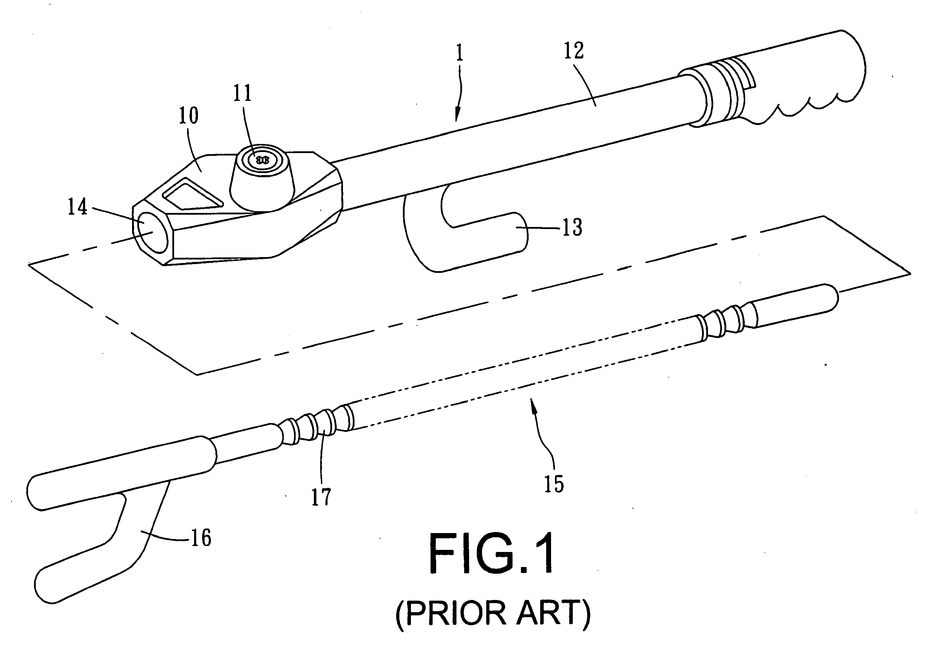

Referring to Fig. 1, a conventional automobile steering wheel lock 1 includes a lock base 10 provided thereon with a lock core 11 and having one end fixed with a stationary rod 12 having a hook 13 secured at its underside. The lock base 10 has the other end bored with an insert slot 14 for a telescopic rod 15 to be inserted therein. The telescopic rod 15 has one end disposed with a clasping member 16 and its surface provided with several continual engage grooves 17. In using, the steering wheel lock 1 is first flatly positioned on the automobile steering wheel and has the hook 13 at the underside of the stationary rod 12 hooked on the inner side of one side of the steering wheel. Subsequently, the telescopic rod 15 is drawn outward to have the clasping member 16 clasped on the inner side of another side of the steering wheel. By so designing, when the stationary rod 12 is extended and firmly positioned between the steering wheel and a driver's seat, the rotating angles of the steering wheel can be restricted and thus the automobile can be prevented from being burgled.

However, the conventional steering wheel lock 1 is liable to be destroyed by a burglar and fails to produce locking effect in case the burglar employs tools to reversely knock the telescopic rod 15 or the lock base 10 with a great force to break the engage pin in the lock core 11.

An automobile steering wheel lock including a stationary base, a movable constrict base, an insert pin, a helical spring, and a locking member is known from US 7 043 947 B1.

An automobile steering wheel lock comprising the features of the preamble of claim 1 is known from DE 295 20 462 U1.

It is an object of the present invention to provide an automobile steering wheel lock which is easy to manufacture and to handle.

This object is solved by an automobile steering wheel lock comprising the features of claim 1. A further embodiment is mentioned in the sub-claim.

### BRIEF DESCRIPTION OF DRAWINGS

This invention will be better understood by referring to the accompanying drawings, wherein:
Fig. 1 is an exploded perspective view of a conventional automobile steering wheel lock;
Fig. 2 is an exploded perspective view of an automobile steering wheel lock in the present invention;
Fig. 3 is a perspective view of the automobile steering wheel lock in the present invention;
Fig. 4 is a cross-sectional view of the automobile steering wheel lock in the present invention in an unlocked condition; and
Fig. 5 is a cross-sectional view of the automobile steering wheel lock in the present invention in a locked condition.

### DETAILED DESCRIPTION OF THE PREFERRED EMBODIMENT

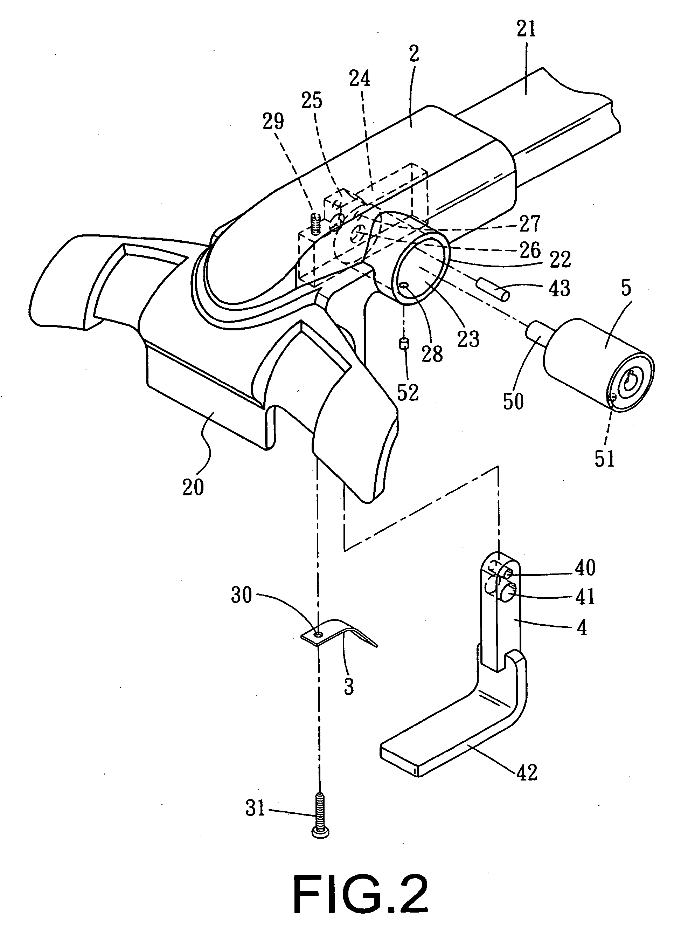

A preferred embodiment of an automobile steering wheel lock in the present invention, as shown in Fig. 2, includes a base 2, an elastic plate 3, a position-limiting rod 4 and a lock core 5 as main components combined together.

The base 2 has a front end provided with a clasping member 20, a rear end provided with a stationary rod 21, and one side provided with a lock core holder 22 formed therein with a recessed chamber 23. The base 2 further has an underside provided with an accommodating chamber 24 formed therein with a recess 25 and a threaded hole 29. The recessed chamber 23 of the lock core holder 22 is bored with a lock pin hole 26 and an insert hole 27 both passing through the accommodating chamber 24. The lock core holder 22 has its wall bored with a pin hole 28 communicating with the recessed chamber 23.

The elastic plate 3 assembled in the accommodating chamber 24 of the base 2 is bored with an insert hole 30 for a locking member 31 to be inserted therethrough and screwed in the threaded hole 29 of the base 2.

The position-limiting rod 4 assembled in the accommodating chamber 24 of the base 2 is provided with an insert hole 40, a lock pin hole 41, a blocking plate 42 fixed at a lower end, and a pivot 43 capable of being inserted in both the insert holes 27, 40 of the lock core holder 22 and of the position-limiting rod 4.

The lock core 5 received in the recessed chamber 23 of the lock core holder 22 is provided with a lock pin 50, a pin hole 51 in its outer wall, and a fixing pin 52 capable of being inserted in both the pin holes 28, 51 of the lock core holder 22 and of the lock core 5.

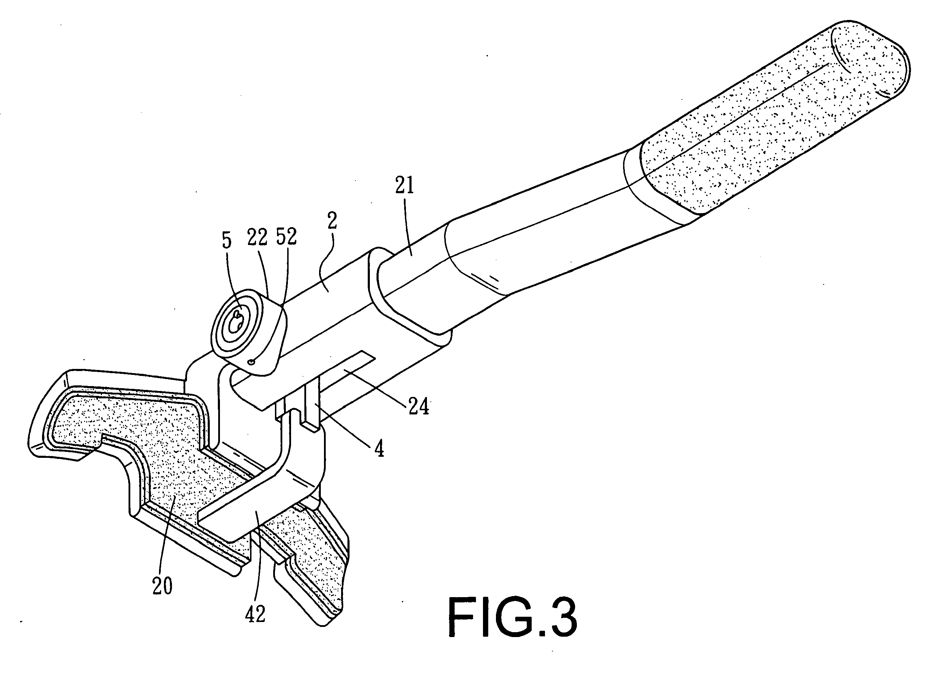

In assembling, referring to Figs. 2, 3 and 4, firstly, insert the locking member 31 through the insert hole 30 of the elastic plate 3 and screw it in the threaded hole 29 of the accommodating chamber 24 of the base 2 so as to fix one end of the elastic plate 3 in the accommodating chamber 24. Secondly, place an upper end of the position-limiting rod 4 in the recess 25 of the base 2, with the insert hole 40 of the position-limiting rod 4 aligned to the insert hole 27 of the lock core holder 22. Thirdly, insert the pivot 43 through the recessed chamber 23 of the lock core holder 22 into the insert holes 27 and 40 of the lock core holder 22 and of the position-limiting rod 4 so as to pivotally fix the upper end of the position-limiting rod 4 inside the base 2, with the other end of the elastic plate 3 elastically pushing against one side of the position-limiting rod 4. Finally, position the lock core 5 in the recessed chamber 23 of the lock core holder 22, with the lock pin 50 of the lock core 5 inserted in the lock pin hole 26 of the lock core holder 22 and with the pin hole 51 of the lock core 5 aligned to the pin hole 28 of the lock core holder 22, and then insert the fixing pin 52 in the pin holes 28 and 51 of the lock core holder 22 and of the lock core 5 so as to secure the lock core 5 in the lock core holder 22, thus finishing assembly of the automobile steering wheel lock.

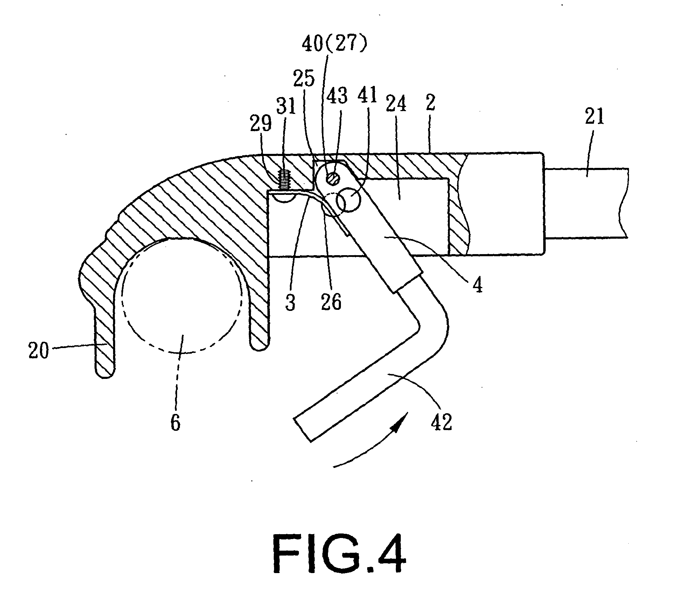

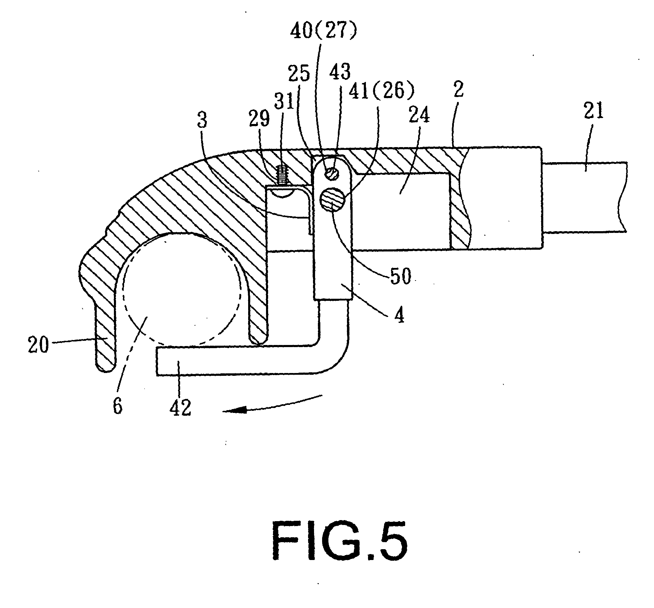

To lock the steering wheel lock of the present invention on an automobile steering wheel 6, referring to Figs. 4 and 5, firstly, clasp the clasping member 20 of the steering wheel lock on the automobile steering wheel 6, with the stationary rod 21 resting on an instrumental panel (not shown) of the automobile. Secondly, push the blocking plate 42 of the position-limiting rod 4 to rotate toward the clasping member 20 with the pivot 43 serving as a rotating center, by which the position-limiting rod 4 will press the elastic plate 3 to make it bent elastically. Thirdly, align the lock pin hole 41 of the position-limiting rod 4 to the lock pin 50 of the lock core 5. Finally, press the lock core 5 into the lock core holder 22 to make the lock pin 50 moved inwards and inserted in the lock pin hole 41 of the position-limiting rod 4 so as to restrict the position-limiting rod 4 in position, with the blocking plate 42 of the position-limiting rod 4 stopped at an underside of the clasping member 20 to hold the automobile steering wheel 6, thus finishing locking the steering wheel lock on the automobile steering wheel 6.

To unlock the steering wheel lock, as shown in Fig. 4, only insert a key into the lock core 5 and turn it around to actuate the lock pin 50 to move away from the lock pin hole 41 of the position-limiting rod 4 to make the position-limiting rod 4 no longer restricted by the lock pin 50, by which the elastic plate 3 will recover its elastic force to automatically push the position-limiting rod 4 to move backward to disengage the blocking plate 42 of the position-limiting rod 4 from the underside of the clasping member 20 and no longer hold the steering wheel 6. Thus the steering wheel lock can be removed from the automobile steering wheel 6, able to be locked and unlocked quickly and conveniently and having excellent effect in anti-burglary of automobiles.

As can be understood from the above description, this invention is much better than the conventional automobile steering wheel lock in effect of anti-burglary as well as in practicability.

## Claims

1. Automobile steering wheel lock comprising:
a base (2) having a front end provided with a clasping member (20), a rear end provided with a stationary rod (21), and one side provided with a lock core holder (22) formed therein with a recessed chamber (23);
a lock core (5) received in said recessed chamber (23) of said lock core holder (22) and provided with a lock pin (50) fixed thereon;
said base (2) having an underside provided with an accommodating chamber (24) formed therein with a recess (25), and said recessed chamber (23) of said lock core holder (22) bored with a lock pin hole (26) and an insert hole (27) both passing through said accommodating chamber (24);
a position-limiting rod (4) assembled in said accommodating chamber (24) of said base (2) and provided with an insert hole (40), a lock pin hole (41), a blocking plate (42) fixed at a lower end, and a pivot (43) capable of being inserted in said insert holes (27), (40) of said lock core holder (22) and of said position-limiting rod (4), with the blocking plate (42) of the position-limiting rod (4) stopped at an underside of said clasping member (20) of said base (2) to hold an automotive steering wheel (6) in a locking position,
**characterized in that**
said accommodating chamber (24) of said base (2) is bored with a threaded hole (29), an elastic plate (3) elastically pushing against one side of the position-limiting rod (4), is assembled in said accommodating chamber (24) of said base (2), and said elastic plate (3) is provided with an insert hole (30) and a locking member (31) capable of being inserted through said insert hole (30) of said elastic plate (3) and screwed in said threaded hole (29) of said base (2).

2. Automobile steering wheel lock according to claim 1, **characterized in that** said lock core holder (22) is bored with a pin hole (28) communicating with said recessed chamber (23), and said lock core (5) is provided with a pin hole (51) in its outer wall and a fixing pin (52) inserted in said pin holes (28), (51) of said lock core holder (22) and of said lock core (5).

## Patentansprüche

1. Kraftfahrzeug-Lenkradschloß, umfassend eine Grundplatte (2) mit einem Vorderende, das mit einem Zungenkörper (20) versehen ist, einem Hinterende, das mit einem stationären Stab (21) versehen ist, und einer Seite, die einen Schloßkernhalter (22) aufweist, in dem eine vertiefte Kammer (23) ausgebildet ist; ferner umfassend einen Schloßkern (5), der in der vertieften Kammer (23) des Schloßkernhalters (22) aufgenommen wird und mit einem auf ihm fixierten Schloßzapfen (50) versehen ist; wobei die Grundplatte (2) eine Unterseite aufweist, in der eine Aufnahmekammer (24) mit einer Vertiefung (25) ausgebildet ist, und die vertiefte Kammer (23) des Schloßkernhalters (22) ein Schloßzapfenloch (26) und ein Einsteckloch (27) aufweist, die beide durch die Aufnahmekammer (24) hindurchgehen; des weiteren umfassend einen Positionsbegrenzungsstab (4), der in die Aufnahmekammer (24) der Grundplatte (2) eingebaut und mit einem Einsteckloch (40) versehen ist, des weiteren mit einem Schloßzapfenloch (41), mit einer Sperrplatte (42), die an einem unteren Ende befestigt ist, und einem Drehzapfen (43), der in die Einstecklöcher (27, 40) des Schloßkernhalters (22) und des Positionsbegrenzungsstabes (4) einsteckbar ist, wobei die Sperrplatte (42) des Positionsbegrenzungsstabes (4) an eine Unterseite des Zungenkörpers (20) der Grundplatte (2) anschlägt, um ein Kraftfahrzeug-Lenkrad (6) in einer Verriegelungslage zu halten, **dadurch gekennzeichnet, daß** die Aufnahmekammer (24) der Grundplatte (2) mit einer Gewindebohrung (29) versehen ist, und eine federnde Platte (3), die federnd gegen die eine Seite des Positionsbegrenzungsstabs (4) stößt, in der Aufnahmekammer (24) der Grundplatte (2) angeordnet ist, und daß die federnde Platte (3) mit einem Einsteckloch (30) und einem Verriegelungskörper (31) versehen ist, der durch das Einsteckloch (30) der federnden Platte (3) gesteckt und in das Gewindeloch (29) der Grundplatte (2) geschraubt werden kann.

2. Kraftfahrzeug-Lenkradschloß nach Anspruch 1, **dadurch gekennzeichnet, daß** der Schloßkernhalter (22) mit einer Stiftbohrung (28) versehen ist, die mit der vertieften Kammer (23) in Verbindung steht, und daß der Schloßkern (5) ein Stiftloch (51) in seiner äußeren Wand aufweist sowie einen Befestigungsstift (52), der in die Stiftlöcher (28, 51) des Schloßkernhalters (22) und des Schloßkerns (5) einsteckbar ist.

## Revendications

1. Verrouillage pour volant de direction de véhicule automobile, comprenant :
une base (2) ayant une extrémité frontale pourvue d'un élément de préhension (20), une extrémité postérieure pourvue d'une barre stationnaire (21), et un côté pourvu d'un porte-noyau (22) de verrouillage dans lequel est formée une chambre évidée (23) ;
un noyau de verrouillage (5) reçu dans ladite chambre évidée (23) dudit porte-noyau (22) de verrouillage et pourvu d'une tige de verrouillage (50) fixée sur celui-ci ;
ladite base (2) ayant une face inférieure pourvue d'une chambre de logement (24) dans laquelle est formé un évidement (25), ladite chambre évidée (23) dudit porte-noyau (22) étant percée d'un trou de tige de verrouillage (26) et d'un trou d'insertion (27) qui passent tous les deux à travers ladite chambre de logement (24) ;
une barre de limitation de position (4) assemblée dans ladite chambre de logement (24) de ladite base (2) et pourvue d'un trou d'insertion (40), d'un trou de tige de verrouillage (41), d'une plaque de blocage (42) fixée à une extrémité inférieure, et d'un pivot (43) capable d'être introduit dans lesdits trous d'insertion (27), (40) dudit porte-noyau (22) et de ladite tige (4) de limitation de position, la plaque de blocage (42) de la tige de limitation de position (4) étant arrêtée à une face inférieure dudit élément de préhension (20) de ladite base (2) pour maintenir un volant de direction (6) de véhicule automobile dans une position de verrouillage,
ladite chambre de logement (24) de ladite base (2) est percée d'un trou taraudé (29), une plaque élastique (3) poussant élastiquement contre un côté de la barre de limitation de position (4) est assemblée dans ladite chambre de logement (24) de ladite base (2), et ladite plaque élastique (3) est pourvue d'un trou d'insertion (30), et un élément de blocage (31) capable d'être introduit à travers ledit trou d'insertion (30) de ladite plaque élastique (3) et d'être vissé dans ledit trou taraudé (29) de ladite base (2).

2. Verrouillage pour volant de direction de véhicule automobile selon la revendication 1, **caractérisé en ce que** ledit porte noyau (22) de verrouillage est percé avec un trou à tige (28) qui communique avec ladite chambre évidée (23), et ledit noyau de verrouillage (5) est pourvu d'un trou à tige (51) dans sa paroi extérieure, et d'une tige de fixation (52) insérée dans lesdits trous à tige (28), (51) dudit porte-noyau (22) et dudit noyau de verrouillage (5).
